# EUROPÄISCHE PATENTSCHRIFT

(11) **EP 3 245 049 B1**
(45) Veröffentlichungstag und Bekanntmachung des Hinweises auf die Patenterteilung: **18.08.2021**
(21) Anmeldenummer: 15801146.0
(22) Anmeldetag: 25.11.2015
(51) Int. Cl.: B29C 70/68, B29C 70/74, F16C 3/02

(54) **FASERVERSTÄRKTES ROHR**
FIBRE-REINFORCED TUBE
TUBE RENFORCÉ PAR DES FIBRES

(30) Priorität: 16.01.2015 DE 102015200625
(43) Veröffentlichungstag der Anmeldung: 22.11.2017
(73) Patentinhaber: Bayerische Motoren Werke Aktiengesellschaft, 80809 München (DE)
(72) Erfinder: JÄGER, Elmar, 87439 Kempten im Allgäu (DE); HEYL, Gerrit, 82131 Gauting (DE); SCHRUPP, Rudolf, 82110 Germering (DE)
(86) Internationale Anmeldenummer: PCT/EP2015/077593
(87) Internationale Veröffentlichungsnummer: WO 2016/113024

(56) Entgegenhaltungen:
- EP-A2- 1 864 893
- CN-Y- 201 026 980
- CN-Y- 201 268 352
- US-A1- 2012 066 994

## Beschreibung

Die Erfindung betrifft ein Einlegeelement zum Anordnen in einem Klemmbereich eines faserverstärkten Rohres, ein entsprechend verstärktes faserverstärktes Rohr und ein Verfahren zu dessen Herstellung.

Faserverstärkte Rohre kommen in zahlreichen Anwendungsfeldern zum Einsatz. Sie bieten gegenüber Rohren aus metallischen Werkstoffen unter anderem einen besonderen Gewichtsvorteil bei einer gleichzeitig hohen Steifigkeit und einer großen gestalterischen Freiheit.

Eine besondere Herausforderung stellt jedoch die ortsfeste Anbindung der faserverstärkten Rohre an andere Bauteile dar. Eine Klemmung des Rohres in definierten Klemmbereichen, wie sie bei Metallrohren möglich ist, ist aufgrund der speziellen Materialeigenschaften des Faserverbundwerkstoffs der faserverstärkten Rohre nur eingeschränkt möglich. Bei starker Einwirkung einer Klemmkraft wird der Werkstoff lokal komprimiert wodurch es zu einem unerwünschten Setzungsverhalten oder sogar zu einer Delamination kommen kann. In beiden Fällen wird eine Struktur des Rohres beschädigt und eine Festigkeit erheblich herabgesetzt.

Beispielsweise bietet der Einsatz von faserverstärkten Rohren als Lenkerrohre für Motorräder neben den genannten Gewichtsvorteilen zusätzlich die Möglichkeit mittels eines geeigneten Faserverbundwerkstoffs oder einer geeigneten Faserverbundmischung ein besonders günstiges Schwingungsverhalten des Lenkers bereitzustellen, welches die auf den Fahrer wirkenden Vibrationen während der Fahrt deutlich reduziert. Jedoch ist eine Klemmung mit den bisherigen Klemmanordnungen aufgrund der genannten Beschädigungsgefahren nicht möglich. Vielmehr müssen aufwendige Befestigungsvorrichtungen oder spezielle Abstimmungen des Fasermaterials durchgeführt werden.

Als Stand der Technik sind die EP 1 864 893 A2, CN 201 026 980 Y und CN 201 268 352 Y bekannt.

Aufgabe der Erfindung ist es daher eine möglichst einfache und günstige Klemmung eines faserverstärkten Rohres zu ermöglichen.

Diese Aufgabe wird gelöst durch eine Rohranordnung mit den Merkmalen des Patentanspruchs 1, und einem Verfahren zur Herstellung einer Rohranordnung gemäß Patentanspruch 9.

Vorteilhafte Ausführungsformen ergeben sich aus den jeweils abhängigen Patentansprüchen.

Demnach wird eine Rohranordnung mit einem faserverstärkten Rohr und einem Einlegeelement vorgeschlagen, wobei das Rohr mindestens einen Klemmbereich zur Beaufschlagung mit einer externen Klemmkraft aufweist und das Einlegeelement zum Anordnen in dem Klemmbereich des faserverstärkten Rohres ausgebildet ist und einen länglichen Rundkörper umfasst, der eine äußere Mantelfläche aufweist, auf der mindestens zwei Vorsprünge angeordnet sind, welche sich radial von der Mantelfläche weg erstrecken. Außerdem weisen die Vorsprünge jeweils eine von dem Rundkörper abgewandte Stirnfläche zur flächigen Beaufschlagung mit einer externen Klemmkraft auf, wobei das Einlegeelement derart in dem Klemmbereich angeordnet ist, dass sich die mindestens zwei Vorsprünge in eine Wandung des Rohres radial hinein erstrecken.

Dies bedeutet, dass das Einlegeelement dazu vorgesehen werden kann, in einem Klemmbereich eines faserverstärkten Rohres angeordnet zu werden, um diesen lokal zu verstärken und die externen Klemmkräfte in geeigneter Weise aufzunehmen. Hierzu sind die Vorsprünge an dem Einlegeelement vorgesehen, die auf ihrer Stirnfläche mit der externen Klemmkraft beaufschlagt werden können, um diese in das Einlegeelement einzuleiten beziehungsweise eine Gegenkraft zu der Klemmkraft bereitzustellen. Als länglicher Rundkörper kommen insbesondere in einer Längsrichtung erstreckte, rotationssymmetrische Formen in Betracht.

So ist beispielsweise der Rundkörper ein Zylinder oder ein Kegelstumpf. Des Weiteren kann der Rundkörper massiv oder als Hohlkörper ausgeführt sein. Besonders bevorzugt ist ein hülsenartiger Rundkörper mit einem in einer Längsrichtung konstanten Querschnitt oder einem sich in der Längsrichtung verjüngenden Querschnitt.

Gemäß bevorzugter Ausführungsformen weisen die Vorsprünge jeweils einen rautenförmigen, ovalen, mehreckigen oder runden Querschnitt auf. Diese Querschnitte erlauben aufgrund ihrer Form bei geeigneter Dimensionierung einen besonders vorteilhaften Verlauf von Fasermaterial, welches zur Herstellung des faserverstärkten Rohres eingesetzt wird. Die hierin enthaltenen Fasern können aufgrund der beschriebenen Querschnittsformen leicht um die genannten Vorsprünge gelegt werden, so dass diese von dem Fasermaterial ausgespart bleiben. Eine Unterbrechung oder eine starke Umlenkung der Fasern, welche zu einer lokalen Bauteilschwächung führen würden, werden auf diese Weise vermieden.

Beispielsweise bietet die rautenförmige Querschnittsform eine vorteilhafte Form. Zumindest für Fasern, die entlang der Längserstreckung (0°) der Rauten oder unter Winkeln kleiner +/-45° zu dieser Längsrichtung ausgerichtet sind, ermöglicht diese Form eine vorteilhafte Aufspreizung des Fasermaterials, welche gleichzeitig abrupte Richtungsänderungen der Fasern vermeidet und stattdessen eine geringe Ablenkung der Fasern erlaubt.

Vorzugsweise weist die Mantelfläche eine erste und eine zweite Oberflächenhälfte auf, wobei eine Symmetrieachse des Rundkörpers in einer gedachten, die beiden Oberflächenhälften lediglich virtuell voneinander trennenden Trennebene liegt, und jeder Oberflächenhälfte mindestens einer der Vorsprünge, vorzugsweise mindestens zwei Vorsprünge, zugeordnet ist.

Dies bedeutet, dass sich die Mantelfläche zumindest gedanklich in die zwei Hälften des Mantels aufteilen lässt und jede der Hälften den mindestens einen Vorsprung aufweist. Die beiden Oberflächenhälften sind derart angeordnet, dass die Rotationsachse des Rundkörpers, welche gleichzeitig dessen Symmetrieachse bildet, innerhalb der virtuellen Trennebene liegt. Folglich wird die Mantelfläche entlang der Symmetrieachse in zwei gleiche Hälften aufgeteilt, die entgegengesetzt zueinander angeordnet sind. Jede Oberflächenhälfte bildet somit jeweils eine sich um 180° in Umfangsrichtung erstreckende Fläche, an die sich in Umfangsrichtung unmittelbar die zweite Hälfte anschließt. Diese Teilung ist lediglich als eine "gedankliche" beziehungsweise virtuelle Teilung zu verstehen, was bedeutet, dass die beiden Mantelhälften nicht tatsächlich getrennt sein müssen, sondern einstückig miteinander und mit dem Rundkörper ausgeführt sein können.

Die Ausführungsform bietet die Möglichkeit jeweils mindestens einen Vorsprung auf jeder Oberflächenhälfte anzuordnen, so dass über den oder die Vorsprünge der ersten Oberflächenhälfte eine Klemmkraft eingeleitet und diese über die Vorsprünge der entgegengesetzten zweiten Oberflächenhälfte abgestützt werden kann, wenn das Rohr in eingebautem Zustand mit der externen Klemmkraft beaufschlagt wird.

Außerdem kann das Einlegeelement aus Metall, insbesondere Edelstahl, Kunststoff, faserverstärkten Kunststoff oder Keramik bestehen. Aus Gründen einer möglichen Korrosion sollte der Werkstoff des Einlegeelements vorzugsweise aus kompatiblem Werkstoff gefertigt sein oder zumindest eine galvanische Isolation zwischen dem Einlegelement und dem Rohr vorgesehen sein.

Vorzugsweise weist der Klemmbereich mindestens ein Einlegeelement auf. Dessen Vorsprünge erstrecken sich in die Wandung des Rohres hinein, so dass das Einlegeelement an der vorgesehenen Position fixiert ist. Eine in dem Klemmbereich eingeleitete Klemmkraft wird über die Vorsprünge des Einlegeelements abgestützt, so dass die aus Fasermaterial bestehende Wandung des Rohres entlastet wird. Eine Klemmung erfolgt also je nach Höhe der Vorsprünge teilweise oder vollständig über das Einlegeelement und nicht (vollständig) über die Wandung des faserverstärkten Rohres.

Vorzugsweise ist hierzu eine jeweilige Höhe der Vorsprünge kleiner oder gleich einer Wandungsdicke des Rohres gewählt. Dies bedeutet, dass sich die Vorsprünge derart in die Wandung des Rohres hinein erstrecken, dass diese lediglich zu einem Teil beziehungsweise einer definierten Tiefe in die Wandung hineinragen oder sich vollständig durch diese hindurch ertrecken. Für den bevorzugten Fall, dass die Höhe der Vorsprünge gleich der Dicke der Wandung ist, schließt die Stirnfläche der Vorsprünge bündig mit der Mantelfläche des Rundkörpers ab.

Für den Fall, dass die Höhe der Vorsprünge geringer ist, als die Dicke der Wandung sollte vorzugsweise die Stirnfläche des Vorsprungs ebenfalls freiliegen und nicht durch eine Wandung bedeckt sein. So kann eine unmittelbare Beaufschlagung mit einer Klemmkraft ermöglicht werden, ohne dass Faserverbundmaterial zwischen der Stirnfläche und einer die Klemmkraft aufbringenden Klemmvorrichtung eingeklemmt und eventuell beschädigt wird.

In diesem Fall kann die Höhe der Vorsprünge vorzugsweise derart gewählt werden, dass zumindest in einem späteren geklemmten Zustand, in welchem das Fasermaterial durch die Klemmkraft in definiertem Umfang komprimiert wurde, die Stirnfläche des Vorsprungs bündig mit der erzeugten "komprimierten" Mantelfläche verläuft, um eine weitere Komprimierung des Faserverbundmaterials zu verhindern und stattdessen die Klemmkraft über die Vorsprünge auf dem Einlegeelement abzustützen.

Für den Fall, dass die Vorsprünge bereits eine Höhe aufweisen, die der (unkomprimierten) Wanddicke entsprechen, also die Höhe der Vorsprünge gleich der Wanddicke ist, so kann die Klemmkraft bereits ohne eine Komprimierung des faserverstärkten Rohres von dem Einlegeelement abgestützt werden.

Als beispielhafter Anwendungsfall kann das Rohr beziehungsweise die gesamte Rohranordnung als Lenkerrohr eines Motorrades, eines Scooters, eines Rollers oder eines anderen motorradähnlichen Fahrzeuges verwendet werden.

Außerdem wird ein Verfahren zum Herstellen einer Rohranordnung mit den folgenden Schritten vorgeschlagen:
- Bereitstellen eines formgebenden Kernelements,
- Anordnen einer Anzahl von Einlegelementen auf dem Kernelement,
- Erzeugen eines faserverstärkten Rohres, welches das Kernelement und die Einlegeelemente umschließt,
derart, dass sich Vorsprünge der Einlegeelemente zumindest in einem ausgehärteten Zustand des Rohres durch eine Wandung des erzeugten Rohres hindurch erstrecken, so dass eine jeweilige Stirnfläche der Vorsprünge zur flächigen Beaufschlagung mit einer externen Klemmkraft zugänglich ist.

Des Weiteren ist das Kernelement zum Erzeugen des faserverstärkten Rohres aufblasbar und das Verfahren umfasst einen Schritt des Befüllens des Kerns mit einem Fluid, insbesondere mit einem gasförmigen oder flüssigen Fluid, zur Volumenvergrößerung des Kerns. Auf diese Weise kann das zu erzeugende Rohr gegen ein Formgebungswerkzeug zur Erzeugung einer gewünschten Form aufgeblasen werden.

Außerdem kann der Schritt des Erzeugens des faserverstärkten Rohres ein Umschließen des Kernelements und der Einlegeelemente mit Fasermaterial, insbesondere imprägniertem Fasermaterial oder nicht-imprägniertem Fasermaterial, und/oder einen Schritt des Imprägnierens des Fasermaterials mit einer Matrix, insbesondere in einem RTM-Prozess, und/oder einen Schritt des Aushärtens des erzeugten Rohres umfassen.

Ferner kann der Schritt des Umschließens ein Umwickel, Umweben und/oder Umflechten mit Fasermaterial umfasst, insbesondere mit Faserrovings, Geweben, Gelegenen, Geflechten, Gewirken, Gestricken.

Das Rohr kann demnach beispielweise mittels vorimprägnierter Prepregs umwickelt oder umflochten werden. Alternativ ist ein Umflechten mit trockenen, nicht-vorimprägnierten Fasern oder Faserhalbzeugen möglich, welche anschließend in ein Presswerkzeug zum Imprägnieren eingelegt und verarbeitet werden.

In jedem Fall werden die Einlegeelemente bei der Herstellung fest in dem faserverstärkten Rohr integriert.

Die Erfindung wird nachfolgend anhand eines Ausführungsbeispiels unter Bezugnahme auf die Figuren näher erläutert. Es zeigen:
- Fig. 1: eine erste Ausführungsform eines Einlegeelements in perspektivischer Ansicht,
- Fig. 2: eine zweite Ausführungsform eines Einlegeelements in perspektivischer Ansicht,
- Fig. 3: eine Rohranordnung mit einem Einlegeelement gemäß Fig. 1,
- Fig. 4: eine Detailansicht der Klemmbereiche der Rohranordnung aus Fig. 3,
- Fig. 5: eine Schnittansicht eines Klemmbereichs aus Fig. 4, und
- Fig. 6: eine Draufsicht auf einen Vorsprung des in der Rohranordnung aus Fig. 4 eingesetzten Einlegeelements.

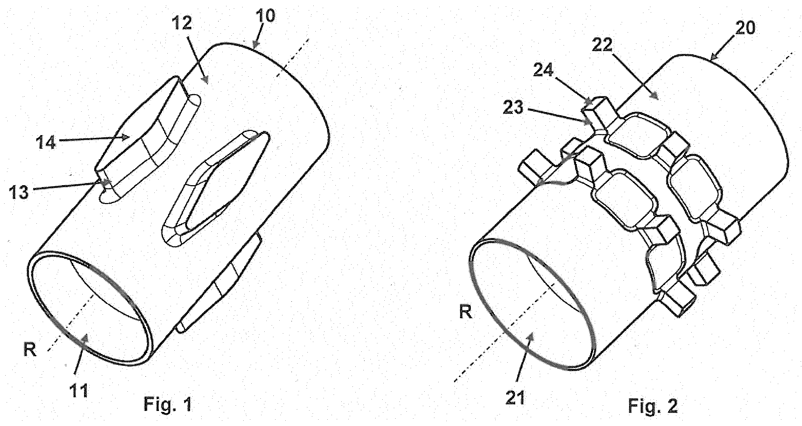

Fig. 1 zeigt eine erste Ausführungsform eines Einlegeelements 10 zum Anordnen in einem Klemmbereich eines nicht dargestellten faserverstärkten Rohres. Das Einlegeelement 10 weist einen länglichen Rundkörper 11 mit einer äußeren Mantelfläche 12 auf. Auf dieser Mantelfläche 12 ist eine Anzahl von Vorsprüngen 13 angeordnet, welche sich radial von der Mantelfläche 12 weg erstrecken. Jeder dieser Vorsprünge weist jeweils eine von dem Rundkörper 11 abgewandte Stirnfläche 14 auf, die mit einer externen Klemmkraft beaufschlagbar ist. In einem eingebauten Zustand wird die Klemmkraft über diese Stirnflächen 14 der Vorsprünge 13 in das Einlegeelement 10 eingeleitet und abgestützt.

In der dargestellten Ausführungsform sind die Vorsprünge 13 in einer in Umfangsrichtung des Einlegeelements 10 ausgerichteten Reihe angeordnet.

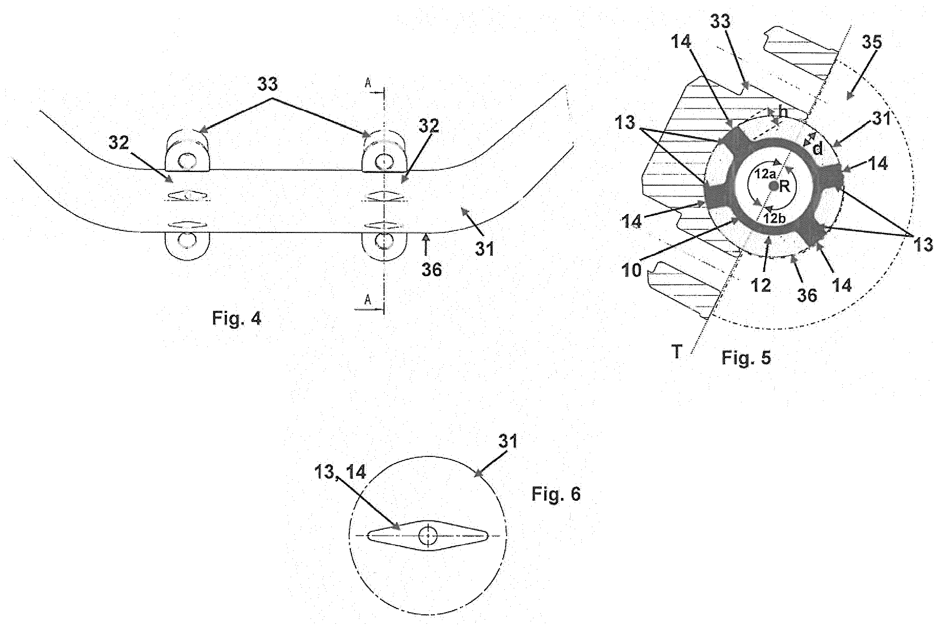

Es versteht sich, dass ebenso mehr als eine Reihe vorgesehen werden kann. Ebenso ist sowohl die Anzahl der Vorsprünge als auch der dargestellte Abstand der Vorsprünge 13 zueinander, insbesondere im Hinblick auf zu erwartende Belastungen, anzupassen. Die dargestellten Vorsprünge 13 weisen außerdem einen rautenförmigen Querschnitt auf, der im Detail nochmals in Fig. 6 dargestellt ist und dessen Ecken optional abgerundet sind, um einen möglichst optimalen Faserverlauf bereitzustellen, der im verbauten Zustand abrupte und unstetige Faserverläufe des faserverstärkten Rohres verringert oder sogar vermeidet.

In Fig. 2 ist eine alternative Ausführungsform eines Einlegeelements 20 dargestellt. Dieses umfasst ebenfalls einen länglichen Rundkörper 21 mit einer Anzahl von Vorsprüngen 23, welche auf einer Mantelfläche 22 angeordnet sind. In diesem Fall sind die Vorsprünge 23 in zwei parallel zueinander angeordneten und in Umfangsrichtung umlaufenden Reihen angeordnet, wobei die jeweiligen Positionen der Vorsprünge versetzt zu den benachbarten Vorsprüngen 23 der jeweils anderen Reihe angeordnet sind. Mit anderen Worten sind die beiden Reihen um einen gewissen Drehwinkel in Umfangsrichtung des Rundkörpers 21 zueinander verdreht. Dies ermöglicht einen verbesserten Faserverlauf für das Faserverbundmaterial eines mit diesem Einlegeelement 20 versehenen faserverstärkten Rohres (nicht dargestellt). Es versteht sich jedoch, dass diese Ausführung der Vorsprünge 23 ebenso lediglich in einer Reihe oder in mehr als zwei Reihen vorgesehen werden kann.

In Fig. 1 und Fig. 2 ist der Rundkörper 11,21 als Zylinder dargestellt, der eine Symmetrieachse R aufweist. Ebenso kann jedoch auch eine andere geometrische Form vorgesehen werden, wie beispielsweise ein Kegelstumpf. Des Weiteren ist der Rundkörper 11,21 als Hohlkörper ausgeführt. Jedoch ist auch eine massive, also eine nicht-hohle Ausführung möglich.

Neben den in den Fig. 1 und 2 dargestellten rautenförmigen und viereckigen Querschnitten der Vorsprünge 13,23 sind selbstverständlich auch andere Querschnittsformen, wie ovale, mehreckige oder runde Querschnitte einsetzbar.

Das Einlegeelement 10,20 besteht vorzugsweise aus Metall, Kunststoff, faserverstärktem Kunststoff oder Keramik. Außerdem kann das Einlegeelement 10,20 einstückig ausgeführt sein, oder aus einzelnen Komponenten zusammengesetzt werden, beispielsweise durch stoffschlüssiges Verbinden von separat hergestellten Vorsprüngen 13,23 oder durch Anspritzen entsprechender Vorsprünge 13,23.

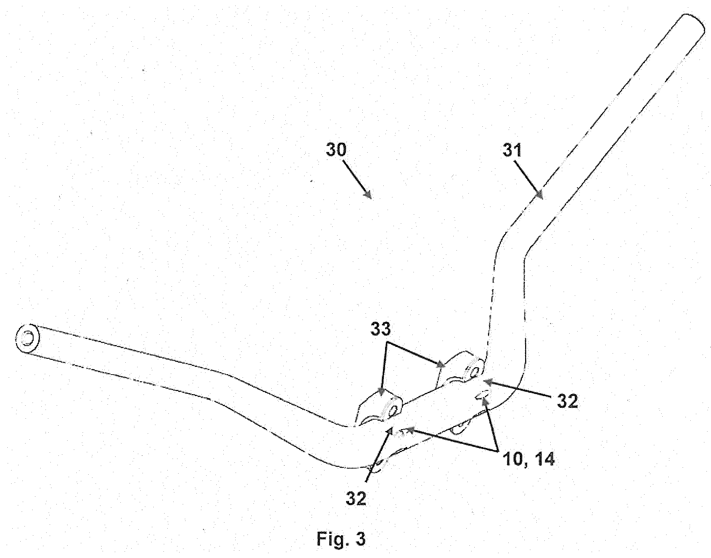

Fig. 3 zeigt eine Rohranordnung 30 mit einem faserverstärkten Rohr 31 und zwei Einlegeelementen 10, wobei das Rohr 31 zwei Klemmbereiche 32 zur ortsfesten Befestigung des Rohres mittels einer Beaufschlagung mit einer externen Klemmkraft aufweist. Eine jeweilige Klemmvorrichtung ist mit jeweils einer Klemmbacke 33 zumindest teilweise dargestellt. Die Einlegeelemente 10 sind derart in dem jeweiligen Klemmbereich 32 angeordnet, dass sich die Vorsprünge 13 in eine Wandung des Rohres radial hinein erstrecken. Im dargestellten Beispiel sind die Einlegeelemente 10 gemäß Fig. 1 ausgeführt, so dass zu deren Aufbau auf die zu Fig. 1 gegebene Beschreibung verwiesen wird.

Das faserverstärkte Rohr 31 ist beispielhaft als Lenkerrohr eines Motorrades, eines Scooters, eines Rollers oder eines anderen motorradähnlichen Fahrzeuges ausgeführt.

Fig. 4 stellt eine Detailansicht der Klemmbereiche 32 der Rohranordnung 30 aus Fig. 3 näher dar. Es ist erkennbar, wie sich die Vorsprünge 13 der Einlegeelemente 10 durch die Wandung des faserverstärkten Rohrs 31 erstrecken und die Stirnfläche 14 der Vorsprünge 13 auf einer äußeren Oberfläche des Rohres sichtbar sind. Auf diese Weise kann eine Klemmkraft unmittelbar in die Vorsprünge 13 eingeleitet werden, so dass eine Kompression beziehungsweise eine Beschädigung des Rohres 31 vermieden wird.

Fig. 5 zeigt eine Schnittansicht A-A eines der beiden in Fig. 4 dargestellten Klemmbereiche 32. Hierbei ist erkennbar, dass eine jeweilige Höhe h der Vorsprünge 13 (im Wesentlichen) gleich einer Wandungsdicke d des Rohres 31 gewählt ist. Die erste Klemmbacke 33 und eine zweite, lediglich schematisch angedeutete zweite Klemmbacke 35 (gestrichelte Darstellung) einer ansonsten nicht näher dargestellten Klemmvorrichtung liegen somit flächig auf einer äußeren Oberfläche 36 des Rohres 31 und gleichzeitig auf den Stirnflächen 14 der jeweiligen Einlegeelemente 13 auf.

Wie aus der Schnittdarstellung ebenfalls erkennbar ist, sind die Vorsprünge 13 nicht regelmäßig über die Mantelfläche 12 des Einlegeelements 10 verteilt. Stattdessen weisen zwei Vorsprünge 13 in Richtung der ersten Klemmbacke 33 und zwei weitere Vorsprünge 13 in Richtung der zweiten Klemmbacke 35.

Mit anderen Worten dargestellt, weist die Mantelfläche 12 des Einlegeelements 10 eine erste 12a und eine zweite Oberflächenhälfte 12b auf, wobei die Symmetrieachse R (senkrecht zur Bildebene) des Rundkörpers 11 in einer gedachten, die beiden Oberflächenhälften 12a,12b voneinander trennenden virtuellen Trennebene T liegt, und jeder Oberflächenhälfte 12a,12b zwei der Vorsprünge 13 zugeordnet sind. Die gedachte Trennebene T ist in diesem Fall identisch mit einer tatsächlichen Teilung der ersten 33 und zweiten Klemmbacke 35. Jede der beiden Oberflächenhälften 12a,12b ist somit jeweils einer Klemmbacke 33,35 zugewandt. Die beiden Oberflächenhälften ergeben sich jedoch lediglich aus einer gedachten Unterteilung zum Verständnis der Anordnungsmöglichkeit der Vorsprünge. Die Mantelfläche 12 muss dagegen nicht tatsächlich in diese beiden Hälften unterteilt sein, sondern kann vielmehr einstückig ausgeführt sein.

In der konkreten Ausführungsform sind die Vorsprünge 13 derart angeordnet, dass jeweils ein auf der ersten Oberflächenhälfte 12a angeordneter Vorsprung 13 und ein auf der zweiten Oberflächenhälfte 12b angeordneter Vorsprung 13 diametral gegenüberliegend zur Rotationsachse R angeordnet sind. Eine über die erste 33 und zweite Klemmbacke 35 eingeleitete Klemmkraft kann somit von dem Einlegeelement 10 abgestützt werden, ohne dass das Faserverbundmaterial des Rohres 31 von der Klemmkraft beaufschlagt und beschädigt wird.

## Patentansprüche

1. Rohranordnung (30) mit einem faserverstärkten Rohr (31) und einem Einlegeelement (10,20), wobei das Rohr (31) mindestens einen Klemmbereich (32) zur Beaufschlagung mit einer externen Klemmkraft aufweist und das Einlegeelement (10,20) zum Anordnen in dem Klemmbereich (32) des faserverstärkten Rohres ausgebildet ist und einen länglichen Rundkörper (11,21) umfasst, der eine äußere Mantelfläche (12,22) aufweist, auf der mindestens zwei Vorsprünge (13,23) angeordnet sind, welche sich radial von der Mantelfläche (12,22) weg erstrecken,
wobei die Vorsprünge (13,23) jeweils eine von dem Rundkörper (11,21) abgewandte Stirnfläche (14,24) zur flächigen Beaufschlagung mit einer externen Klemmkraft aufweisen, wobei das Einlegeelement (10,20) derart in dem Klemmbereich (32) angeordnet ist, dass sich die mindestens zwei Vorsprünge (13) in eine Wandung des Rohres (31) radial hinein erstrecken.

2. Rohranordnung (30) nach Anspruch 1, **dadurch gekennzeichnet, dass** der Rundkörper (11,21) ein Zylinder oder ein Kegelstumpf ist.

3. Rohranordnung (30) nach Anspruch 1 oder 2, **dadurch gekennzeichnet, dass** der Rundkörper (11,21) massiv oder als Hohlkörper ausgeführt ist.

4. Rohranordnung (30) nach einem der Ansprüche 1 bis 3, **dadurch gekennzeichnet, dass** die Vorsprünge (13,23) jeweils einen rautenförmigen, ovalen, mehreckigen oder runden Querschnitt aufweisen.

5. Rohranordnung (30) nach einem der Ansprüche 1 bis 4, **dadurch gekennzeichnet, dass** die Mantelfläche (12,22) eine erste (12a) und eine zweite Oberflächenhälfte (12b) aufweist, wobei eine Symmetrieachse (R) des Rundkörpers (11,21) in einer gedachten, die beiden Oberflächenhälften (12a,12b) voneinander trennenden Trennebene (T) liegt, und jeder Oberflächenhälfte (12a,12b) mindestens einer der Vorsprünge (13,23), vorzugsweise mindestens zwei Vorsprünge(13,23), zugeordnet sind.

6. Rohranordnung (30) nach einem der Ansprüche 1 bis 5, **dadurch gekennzeichnet, dass** das Einlegeelement (10,20) aus Metall, Kunststoff, faserverstärktem Kunststoff oder Keramik besteht.

7. Rohranordnung (30) nach einem der Ansprüche 1 bis 6, **dadurch gekennzeichnet, dass** eine jeweilige Höhe (h) der Vorsprünge (13) kleiner oder gleich einer Wandungsdicke (d) des Rohres (31) gewählt ist.

8. Rohranordnung (30) nach einem der Ansprüche 1 bis 7, **dadurch gekennzeichnet, dass** das Rohr (31) ein Lenkerrohr eines Motorrades, eines Scooters, eines Rollers oder eines anderen motorradähnlichen Fahrzeuges ist.

9. Verfahren zum Herstellen einer Rohranordnung (30) mit den folgenden Schritten:
- Bereitstellen eines formgebenden Kernelements,
- Anordnen einer Anzahl von Einlegelementen (10,20) auf dem Kernelement,
- Erzeugen eines faserverstärkten Rohres (31), welches das Kernelement und die Einlegeelemente (10,20) umschließt,
derart, dass sich Vorsprünge (13,23) der Einlegeelemente (10,20) zumindest in einem ausgehärteten Zustand des Rohres (31) durch eine Wandung des erzeugten Rohres (31) hindurch erstrecken, so dass eine jeweilige Stirnfläche (14,24) der Vorsprünge (13,23) zur flächigen Beaufschlagung mit einer externen Klemmkraft zugänglich ist, wobei das Kernelement zum Erzeugen des faserverstärkten Rohres (31) aufblasbar ist und das Verfahren einen Schritt des Befüllens des Kerns mit einem Fluid, insbesondere einem gasförmigen oder flüssigen Fluid, zur Volumenvergrößerung des Kerns umfasst.

10. Verfahren nach Anspruch 9, wobei der Schritt des Erzeugens des faserverstärkten Rohres (31) ein Umschließen des Kernelements und der Einlegeelemente (10,20) mit Fasermaterial, insbesondere imprägniertem Fasermaterial oder nicht-imprägniertem Fasermaterial, und/oder einen Schritt des Imprägnierens des Fasermaterials mit einer Matrix, insbesondere in einem RTM-Prozess, und/oder einen Schritt des Aushärtens des erzeugten Rohres umfasst.

11. Verfahren nach Anspruch 10, wobei der Schritt des Umschließens ein Umwickel, Umweben und/oder Umflechten mit Fasermaterial umfasst, insbesondere mit Faserrovings, Geweben, Gelegenen, Geflechten Gewirken, Gestricken.

## Claims

1. Tube arrangement (30) having a fibre-reinforced tube (31) and having an insert element (10, 20),
wherein the tube (31) has at least one clamping region (32) for application of an external clamping force, and the insert element (10, 20) is configured for arrangement in the clamping region (32) of the fibre-reinforced tube and comprises an elongate round body (11, 21) which has an outer lateral surface (12, 22) on which there are arranged at least two projections (13, 23) which radially extend away from the lateral surface (12, 22),
wherein the projections (13, 23) each have a face surface (14, 24), averted from the round body (11, 21), for areal application of an external clamping force, wherein the insert element (10, 20) is arranged in the clamping region (32) such that the at least two projections (13) radially extend into a wall of the tube (31) .

2. Tube arrangement (30) according to Claim 1, **characterized in that** the round body (11, 21) is a cylinder or a truncated cone.

3. Tube arrangement (30) according to Claim 1 or 2, **characterized in that** the round body (11, 21) is of solid form or is in the form of a hollow body.

4. Tube arrangement (30) according to one of Claims 1 to 3, **characterized in that** the projections (13, 23) each have a rhomboidal, oval, polygonal or round cross section.

5. Tube arrangement (30) according to one of Claims 1 to 4, **characterized in that** the lateral surface (12, 22) has a first surface half (12a) and a second surface half (12b), wherein an axis of symmetry (R) of the round body (11, 21) lies in an imaginary separating plane (T) which separates the two surface halves (12a, 12b) from one another, and each surface half (12a, 12b) is assigned at least one of the projections (13, 23), preferably at least two projections (13, 23).

6. Tube arrangement (30) according to one of Claims 1 to 5, **characterized in that** the insert element (10, 20) consists of metal, plastic, fibre-reinforced plastic or ceramic.

7. Tube arrangement (30) according to one of Claims 1 to 6, **characterized in that** a respective height (h) of the projections (13) is selected so as to be smaller than or equal to a wall thickness (d) of the tube (31).

8. Tube arrangement (30) according to one of Claims 1 to 7, **characterized in that** the tube (31) is a handlebar tube of a motorcycle, a moped, a scooter or another vehicle similar to a motorcycle.

9. Method for producing a tube arrangement (30), comprising the following steps:
- providing a shape-imparting core element,
- arranging a number of insert elements (10, 20) on the core element,
- producing a fibre-reinforced tube (31), which surrounds the core element and the insert elements (10, 20),
such that projections (13, 23) of the insert elements (10, 20), at least in a hardened state of the tube (31), extend through a wall of the tube (31) produced such that a respective face surface (14, 24) of the projections (13, 23) is accessible for areal application of an external clamping force, wherein the core element, for producing the fibre-reinforced tube (31), can be inflated, and the method comprises a step of filling the core with a fluid, in particular a gaseous or liquid fluid, for increasing the volume of the core.

10. Method according to Claim 9, wherein the step of producing the fibre-reinforced tube (31) comprises surrounding the core element and the insert elements (10, 20) with fibre material, in particular impregnated fibre material or non-impregnated fibre material, and/or a step of impregnating the fibre material with a matrix, in particular in an RTM process, and/or a step of hardening the tube produced.

11. Method according to Claim 10, wherein the step of surrounding comprises winding in an encircling manner, weaving in an encircling manner and/or enlacing with fibre material, in particular with fibre rovings, woven fabrics, layered fabrics, lace fabrics, warp-knitted fabrics, weft-knitted fabrics.

## Revendications

1. Agencement de tube (30) comprenant un tube renforcé par des fibres (31) et un élément d'insertion (10, 20),
le tube (31) comprenant au moins une zone de serrage (32) pour la sollicitation avec une force de serrage externe et l'élément d'insertion (10, 20) étant configuré pour l'agencement dans la zone de serrage (32) du tube renforcé par des fibres et comportant un corps rond allongé (11, 21), qui comprend une surface périphérique extérieure (12, 22), sur laquelle au moins deux protubérances (13, 23) sont agencées, qui s'étendent radialement à partir de la surface périphérique (12, 22),
les protubérances (13, 23) comprenant chacune une surface frontale (14, 24) détournée du corps rond (11, 21) pour la sollicitation en surface avec une force de serrage externe, l'élément d'insertion (10, 20) étant agencé dans la zone de serrage (32) de telle sorte que les au moins deux protubérances (13) s'étendent radialement dans une paroi du tube (31).

2. Agencement de tube (30) selon la revendication 1, **caractérisé en ce que** le corps rond (11, 21) est un cylindre ou un cône tronqué.

3. Agencement de tube (30) selon la revendication 1 ou 2, **caractérisé en ce que** le corps rond (11, 21) est réalisé sous forme massive ou en tant que corps creux.

4. Agencement de tube (30) selon l'une quelconque des revendications 1 à 3, **caractérisé en ce que** les protubérances (13, 23) présentent chacune une section transversale en forme de losange, ovale, polygonale ou ronde.

5. Agencement de tube (30) selon l'une quelconque des revendications 1 à 4, **caractérisé en ce que** la surface d'enveloppe (12, 22) comprend une première (12a) et une deuxième moitié de surface (12b), un axe de symétrie (R) du corps rond (11, 21) se situant dans un plan de séparation imaginaire (T), séparant les deux moitiés de surface (12a, 12b) l'une de l'autre, et au moins une des protubérances (13, 23), de préférence au moins deux protubérances (13, 23), étant associées à chaque moitié de surface (12a, 12b).

6. Agencement de tube (30) selon l'une quelconque des revendications 1 à 5, **caractérisé en ce que** l'élément d'insertion (10, 20) est constitué de métal, de matière plastique, de matière plastique renforcée par des fibres ou de céramique.

7. Agencement de tube (30) selon l'une quelconque des revendications 1 à 6, **caractérisé en ce qu'**une hauteur (h) respective des protubérances (13) est choisie inférieure ou égale à une épaisseur de paroi (d) du tube (31).

8. Agencement de tube (30) selon l'une quelconque des revendications 1 à 7, **caractérisé en ce que** le tube (31) est un tube de guidon d'une moto, d'un scooter, d'une trottinette ou d'un autre véhicule semblable à une moto.

9. Procédé de fabrication d'un agencement de tube (30) comprenant les étapes suivantes :
- la fourniture d'un élément noyau formateur,
- l'agencement d'un nombre d'éléments d'insertion (10, 20) sur l'élément noyau,
- la production d'un tube renforcé par des fibres (31), qui enveloppe l'élément noyau et les éléments d'insertion (10, 20),
de telle sorte que des protubérances (13, 23) des éléments d'insertion (10, 20) s'étendent, au moins à un état durci du tube (31), à travers une paroi du tube produit (31), de telle sorte qu'une surface frontale respective (14, 24) des protubérances (13, 23) soit accessible pour la sollicitation en surface avec une force de serrage externe, l'élément noyau étant gonflable pour la production du tube renforcé par des fibres (31), et le procédé comprenant une étape de remplissage du noyau avec un fluide, notamment un fluide gazeux ou liquide, pour l'agrandissement du volume du noyau.

10. Procédé selon la revendication 9, dans lequel l'étape de production du tube renforcé par des fibres (31) comprend un enveloppement de l'élément noyau et des éléments d'insertion (10, 20) avec un matériau fibreux, notamment un matériau fibreux imprégné ou un matériau fibreux non imprégné, et/ou une étape d'imprégnation du matériau fibreux avec une matrice, notamment dans un procédé RTM, et/ou une étape de durcissement du tube produit.

11. Procédé selon la revendication 10, dans lequel l'étape d'enveloppement comprend un enroulement, un tissage et/ou un tressage avec un matériau fibreux, notamment avec des stratifils de fibres, des tissus, des nappes, des treillis, des tricots, des tulles.
